(19) **Europäisches Patentamt / European Patent Office / Office européen des brevets**

(11) **EP 4 386 500 B1**

(12) **EUROPEAN PATENT SPECIFICATION**

(45) Date of publication and mention
of the grant of the patent:
**22.01.2025 Bulletin 2025/04**

(21) Application number: **23216345.1**

(22) Date of filing: **13.12.2023**

(51) International Patent Classification (IPC):
**G05B 23/02** *(2006.01)*

(52) Cooperative Patent Classification (CPC):
**G05B 23/0229;** G05B 2219/42329

(54) **DEVICE FOR DETERMINING OPERATIONAL STATUS OF SENSOR AND METHOD THEREOF**

VORRICHTUNG ZUR BESTIMMUNG DES BETRIEBSZUSTANDS EINES SENSORS UND VERFAHREN DAFÜR

DISPOSITIF DE DÉTERMINATION D'ÉTAT DE FONCTIONNEMENT DE CAPTEUR ET PROCÉDÉ ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.12.2022 KR 20220177319**

(43) Date of publication of application:
**19.06.2024 Bulletin 2024/25**

(73) Proprietor: **Doosan Enerbility Co., Ltd.**
**Seongsan-gu**
**Changwon-si, Gyeongsangnam-do 51711 (KR)**

(72) Inventors:
• **Lee, Jung Min**
  **Seoul (KR)**

• **Yu, Jun Sang**
  **Seongnam-si, Gyeonggi-do (KR)**

(74) Representative: **BCKIP Part mbB**
**MK1**
**Landsbergerstraße 98, 3.Stock**
**80339 München (DE)**

(56) References cited:
**EP-A1- 4 015 781     US-B2- 10 472 254**

• **KHATIBISEPEHR SHIMA ET AL: "Design of inferential sensors in the process industry: A review of Bayesian methods", JOURNAL OF PROCESS CONTROL, OXFORD, GB, vol. 23, no. 10, 30 August 2013 (2013-08-30), pages 1575 - 1596, XP028774610, ISSN: 0959-1524, DOI: 10.1016/J.JPROCONT.2013.05.007**

# EP 4 386 500 B1

## Description

### BACKGROUND

Generally, performance degradation or failure of a sensor may be caused by a lifetime limit, external shock, etc. When there occurs a problem in the sensor, accuracy and reliability of measured data are reduced and therefore, replacement or repair of the sensor is required.

Further, the reduction in reliability of the sensor data means that the sensor itself is not valid any more. Therefore, to ensure the continuity of a facility in which the sensor is mounted and operated, there is a need for a process of validating whether the sensor itself is valid through the real-time monitoring and analysis of the sensor data. EP 4 015 781 A1 discloses a system for validating the validity of a sensor.

### SUMMARY

The present invention provides a device and a method for determining the operational status of a sensor as recited in the independent claims. Advantageous embodiments are set out in the dependent claims.

An object of the present disclosure is to provide a device and a method for determining the operational status of a sensor, which can intuitively monitor the validity of a sensor by providing control lines of a correlation between a target sensor and a reference sensor.

The invention provides a device for determining the operational status of a sensor, including at least one processor, and at least one memory coupled to the at least one processor, wherein the at least one memory is configured to provide the at least one processor with instructions which, when executed, causes the at least one processor to: determine initial values of parameters of a Bayesian model and a degree of a polynomial regression model based on historical data of a target sensor and historical data of a reference sensor; infer posterior distributions of regression coefficients and an error term of a regression curve representing a correlation between the historical data of the target sensor and the historical data of the reference sensor using the polynomial regression model and the Bayesian model; set a credible interval based on the posterior distributions of the regression coefficients and the error term of the regression curve, and set control lines for data of the target sensor using the credible interval, wherein the control lines are upper limits or lower limits to determine whether the target sensor is normal or abnormal; determine an accuracy of the target sensor based on current data of the target sensor and the control line; and control an operational status of the target sensor based on the accuracy.

In addition, the at least one processor may be further configured to determine the historical data of the reference sensor using a distance correlation between the historical data of the target sensor and historical data of a plurality of sensors not selected as the target sensor.

In addition, in order to update the posterior distributions of the regression coefficients and the error term of the regression curve, the at least one processor may be further configured to set the inferred posterior distribution of the polynomial regression model to a prior distribution of the polynomial regression model, and set a likelihood function.

In addition, the at least one processor may be further configured to validate the posterior distributions of the regression coefficients and the error term of the regression curve based on a R-hat value and an effective sample size.

In addition, the at least one processor may be further configured to set the credible interval based on a highest posterior density (HPD) value having a preset percentage (%) of the posterior distributions of the regression coefficients and of the error term of the regression curve, and set control lines of the data of the target sensor using lower and upper boundary values of the posterior distributions of the regression coefficients and the error term of the regression curve, with the lower and upper boundary values corresponding to lower and upper limits of the credible interval, respectively.

The invention further provides a computer-implemented method for determining an operational status of a sensor, including: determining initial values of parameters of a Bayesian model and a degree of a polynomial regression model based on historical data of a target sensor and historical data of a reference sensor; inferring posterior distributions of regression coefficients and an error term of a regression curve representing a correlation between the historical data of the target sensor and the historical data of the reference sensor using the polynomial regression model and the Bayesian model; setting a credible interval based on the posterior distributions of the regression coefficients and the error term of the regression curve, and setting control lines of data of the target sensor using the set credible interval, wherein the control lines are upper limits or lower limits to determine whether the target sensor is normal or abnormal; determining an accuracy of the target sensor based on current data of the target sensor and the control lines and controlling an operational status of the target sensor based on the accuracy.

In addition, the method for validating validity of a sensor may further include: determining the historical data of the reference sensor using a distance correlation between the historical data of the target sensor and historical data of a plurality of sensors not selected as the target sensor.

In addition, the inferring of the posterior distributions of the regression coefficients and the error term of a regression curve may include replacing a prior distribution determined based on the polynomial regression model with a posterior distribution of a previous polynomial regression model, and setting a likelihood function.

In addition, the inferring of the posterior distributions of the regression coefficients and the error term of the regression curve may include validating the posterior distributions of the regression coefficients and the error term of the regression curve based on an R-hat value and an effective sample size.

In addition, the setting of the control lines of data of the target sensor may include setting the credible interval based on a highest posterior density (HPD) value having a preset percentage (%) of the posterior distributions of the regression coefficients and the error term of the regression curve; and setting control lines of the data of the target sensor using lower and upper boundary values of the posterior distributions of the regression coefficients and the error term of the regression curve, with the lower and upper boundary values corresponding to lower and upper limits of the credible interval.

According to the present disclosure, it is possible to intuitively monitor the validity of a sensor by providing control lines of a correlation between a target sensor and a reference sensor.

Further, according to the present disclosure, it is possible to adjust control lines by setting a posterior distribution of the previous model as a prior distribution.

Further, according to the present disclosure, it is possible to validate a posterior distribution of parameters of a target sensor.


**Brief Description of The Drawings**

FIG. 1 is a diagram showing a configuration of a device for determining an operational status of a sensor according to an embodiment of the present disclosure.

FIG. 2 is a flowchart explaining a method for determining an operational status of a sensor according to an embodiment of the present disclosure.

FIG. 3 is a flowchart explaining a method for determining an operational status of a sensor according to another embodiment of the present disclosure.

FIG. 4 is a flowchart explaining a method for determining initial values of parameters of a polynomial regression model by a device for determining an operational status of a sensor according to an embodiment of the present disclosure.

FIGS. 5A to 5C are views exemplarily showing a safe region, an attention region, and control lines according to an embodiment of the present disclosure.

FIG. 6 is a flowchart explaining a method for determining an operational status of a sensor to which a polynomial regression model is applied according to an embodiment of the present disclosure.


**Detailed description**

To clearly illustrate the present invention, parts not related to the description are omitted, and similar parts are denoted by like reference characters throughout the specification.

In addition, in the description, when an element "includes" a certain component, it means that the element may further include other components, rather than excluding them, unless specifically stated otherwise.

Throughout the specification, when a certain portion is "connected" to another portion, this includes not only a case of being "directly connected" but also a case of being "electrically connected" with other elements interposed therebetween.

When it is described that any one part is "above" the other part, it may mean that the part is "directly above the other part or any other part is interposed therebetween. On the contrary, when it is described that any one part is "directly above" the other part, there is no other part interposed therebetween.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention

The terminology used herein is for the purpose of describing embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Terms "below", "above", and the like indicating a relative space may be used to describe a relationship more easily between one part with another part illustrated in the drawings. These terms are intended to include other meanings or operations of a device that is being used, in addition to meanings intended in the drawings. For example, when the device in the drawing is inverted, any part described as being "below" other parts may be described as being "above" the other parts. Therefore, the exemplary term "below" includes both of an upper direction and a lower direction. The device may rotate by 90° or other angles, and the terms indicating a relative space are interpreted according thereto.

Although not defined otherwise, all terms including technical terms and scientific terms used herein have the same meanings as those generally understood by a person having ordinary knowledge in the art to which the present invention pertains. Terms defined in a dictionary generally used are additionally interpreted as having a meaning consistent with the related art documents and contents currently disclosed, and unless defined otherwise, are not interpreted as having an ideal or very official meaning.

Hereinafter, with reference to the accompanying drawings, embodiments of the present disclosure will be described in detail so that those of ordinary skill in the art can easily implement them. However, the present disclosure may be embodied in several different forms and is not limited to the embodiments described herein.

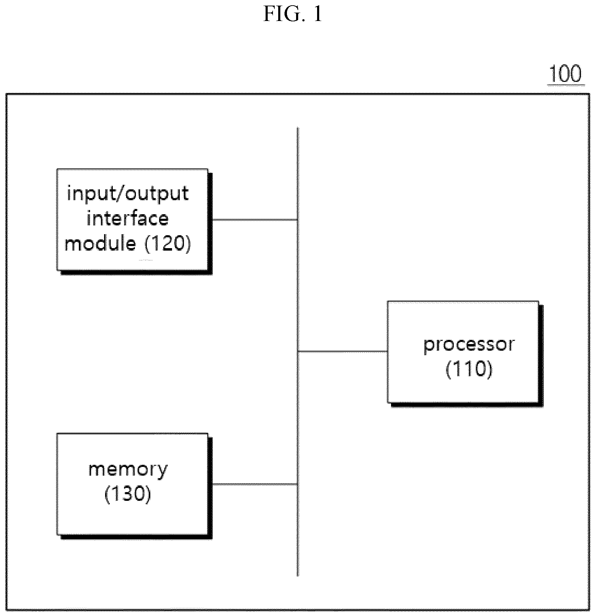

FIG. 1 is a diagram showing a configuration of a device for determining an operational status of a sensor according to an embodiment of the present disclosure.

Referring to FIG. 1, a device 100 for determining the operational status of the sensor according to an embodiment of the present disclosure may include a processor 110, an input/output interface module 120, and a memory 130.

The processor 110, the input/output interface module 120, and the memory 130 included in the device 100 for determining an operational status of a sensor are interconnected and may transmit data to one another.

According to the invention, the processor 110 executes programs or instructions stored in the memory 130. In this case, an operation program (e.g., operating system) for operating the device 100 for determining an operational status of a sensor is stored in the memory 130.

According to various embodiments, the processor 110 may execute a program for managing information about the device 100 for determining an operational status of a sensor.

According to the invention, the processor 110 executes a program for managing the operation of the device 100 for determining an operational status of a sensor.

According to various embodiments, the processor 110 may execute a program for managing the operation of the input/output interface module 120.

According to the invention, the processor 110 executes a program for controlling an operational status of the sensor.

Here, the term 'target sensor' refers to a sensor to be analyzed and the term "reference sensor" refers to a sensor to be compared. The target sensor and the reference sensor may be installed in one or more apparatus, separate from the device. The device 100 analyzes data of the target sensor compared to data of the reference sensor.

i) Determining data of a reference sensor

According to various embodiments, the processor 110 may obtain a historical data of a target sensor and a historical data of a plurality of sensors not selected as the target sensor through the input/output interface module 120.

According to various embodiments, the processor 110 may set a prior distribution of a historical data of a target sensor. In this case, the prior distribution may be prior distributiosn of regression coefficients and an error term of a regression curve representing a correlation between the historical data of the target sensor and the historical data of the plurality of sensors not selected as the target sensor, though not limited thereto.

According to various embodiments, the processor 110 may set a prior distribution of a historical data of the plurality of sensors which are not selected as the target sensor. In this case, the prior distributions may be prior distributions of regression coefficients and an error term of a regression curve representing a correlation between the historical data of the target sensor and the historical data of the plurality of sensors not selected as a target sensor, though not limited thereto.

According to various embodiments, the processor 110 may determine data exhibiting a predetermined high correlation with the historical data of the target sensor. This determination is made among the historical data of the plurality of sensors not selected as the target sensor using distance correlation. However, the method for determining data with the predetermined high correlation is not limited thereto.

According to various embodiments, the processor 110 may determine a sensor whose data exhibits a predetermined high correlation with the historical data of the target sensor, and may designate the sensor as a reference sensor.

According to various embodiments, the processor 110 may set a prior distribution of the historical data of the reference sensor. In this case, the prior distributions may be prior distributions of regression coefficients and an error term of a regression curve representing a correlation between the historical data of the target sensor and the historical data of the reference sensor, though not limited thereto.

ii) Determining initial values of parameters of a Bayesian model

① In case that only the historical data of the target sensor and the historical data of the reference sensor are obtained

According to various embodiments, the processor 110 may obtain the historical data of the target sensor and the historical data of the reference sensor through the input/output interface module 120.

According to the invention, the processor 110 determines initial values of parameters of the Bayesian model based on the historical data of the target sensor, the prior distribution of the historical data of the target sensor, the historical data of the reference sensor, and the prior distribution of the historical data of the reference sensor.

According to the invention, the processor 110 obtains a posterior distribution of the historical data of the target sensor and a posterior distribution of the historical data of the reference sensor using the Bayesian model based on the historical data of the target sensor, the prior distribution of the historical data of the target sensor, the historical data of the reference sensor, and the prior distribution of the historical data of the reference sensor.

According to various embodiments, the processor 110 may train the Bayesian model based on the historical data of the target sensor, the prior distribution of the historical data of the target sensor, the historical data of the reference sensor, and the prior distribution of the historical data of the reference sensor so as to determine initial values of parameters of the Bayesian model.

According to various embodiments, the processor 110 may perform sampling in the historical data of the target sensor, the prior distribution of the historical data of the target sensor, the historical data of the reference sensor, and the prior distribution of the historical data of the reference sensor.

According to various embodiments, the processor 110 may sample standard deviation and coefficients of a regression polynomial corresponding to each of the historical data of the target sensor, the prior distribution of the historical data of the target sensor, the historical data of the reference sensor, and the prior distribution of the historical data of the reference sensor, but the sampled data are not limited thereto.

According to various embodiments, the processor 110 may perform sampling in the historical data of the target sensor, the prior distribution of the historical data of the target sensor, the historical data of the reference sensor, and the prior distribution of the historical data of the reference sensor between 500 and 1000 times, but the number of sampling operations is not limited thereto.

According to various embodiments, the processor 110 may train the Bayesian model based on training data generated by the sampling performed in the historical data of the target sensor, the prior distribution of the historical data of the target sensor, the historical data of the reference sensor, and the prior distribution of the historical data of the reference sensor so as to determine initial values of parameters of the Bayesian model.

According to various embodiments, the processor 110 may validate a training state of the Bayesian model by comparing the posterior distribution obtained by using the Bayesian model with a preset reference value. At this time, the preset reference value may be an acceptance rate and autocorrelation, but is not limited thereto.

According to various embodiments, the processor 110 may determine re-training of the Bayesian model if the posterior distribution obtained by using the Bayesian model cannot satisfy both a predetermined acceptance rate (for example, 0.2 <= acceptance rate <= 0.5) and a predetermined autocorrelation (for example, 50% of the sample is within 95% of the credible interval).

According to various embodiments, the processor 110 may train the Bayesian model repeatedly based on new training data sampled in the historical data of the target sensor, the prior distribution of the historical data of the target sensor, the historical data of the reference sensor, and the prior distribution of the historical data of the reference sensor, until the posterior distribution obtained by using the Bayesian model satisfies both a predetermined acceptance rate (for example, 0.2 <= acceptance rate <= 0.5) and a predetermined autocorrelation (for example, 50% of the sample is within 95% of the credible interval).

According to various embodiments, the processor 110 may stop training of the Bayesian model if the posterior distribution obtained by using the Bayesian model satisfies both the predetermined acceptance rate (for example, 0.2 <= acceptance rate <= 0.5) and the predetermined autocorrelation (for example, 50% of the sample is within 95% of the credible interval).

② In case that the prior distribution of the historical data of the target sensor and the prior distribution of the historical data of the reference sensor are further obtained

According to various embodiments, the processor 110 may obtain the prior distribution of the historical data of the target sensor and the prior distribution of the historical data of the reference sensor, in addition to the historical data of the target sensor, and the historical data of the reference sensor, through the input/output interface module 120. In this case, the prior distribution may be the prior distributions of the regression coefficients and an error term of a regression curve representing a correlation between the historical data of the target sensor and the historical data of the reference sensor, though not limited thereto.

According to various embodiments, the processor 110 may determine initial values of parameters of the Bayesian model based on the prior distribution of the historical data of the target sensor, the historical data of the target sensor, the prior distribution of the historical data of the reference sensor, and the historical data of the reference sensor.

According to various embodiments, the processor 110 may obtain a posterior distribution of the historical data of the target sensor and the historical data of the reference sensor using the Bayesian model based on the prior distribution of the historical data of the target sensor, the historical data of the target sensor, the prior distribution of the historical data of the reference sensor, and the historical data of the reference sensor.

According to various embodiments, the processor 110 may train the Bayesian model based on the prior distribution of the historical data of the target sensor, the historical data of the target sensor, the prior distribution of the historical data of the reference sensor, and the historical data of the reference sensor so as to determine initial values of parameters of the Bayesian model.

According to various embodiments, the processor 110 may perform sampling in the historical data of the target sensor, the prior distribution of the historical data of the target sensor, the historical data of the reference sensor, and the prior distribution of the historical data of the reference sensor.

According to various embodiments, the processor 110 may sample a coefficient and a standard deviation of a regression polynomial corresponding to each data in each of the historical data of the target sensor, the prior distribution of the historical data of the target sensor, the historical data of the reference sensor, and the prior distribution of the historical data of the reference sensor, but sampled data are not limited thereto.

According to various embodiments, the processor 110 may perform the sampling in the historical data of the target sensor, the prior distribution of the historical data of the target sensor, the historical data of the reference sensor, and the prior distribution of the historical data of the reference sensor between 500 and 1000 times, but the number of sampling operations is not limited thereto.

According to various embodiments, the processor 110 may train the Bayesian model based on training data generated by the sampling performed in the historical data of the target sensor, the prior distribution of the historical data of the target sensor, the historical data of the reference sensor, and the prior distribution of the historical data of the reference sensor so as to determine initial values of parameters of the Bayesian model.

According to various embodiments, the processor 110 may validate a training state of the Bayesian model by comparing the posterior distribution obtained by using the Bayesian model with a preset reference value. At this time, the preset reference value may be an acceptance rate and autocorrelation, but is not limited thereto.

According to various embodiments, the processor 110 may determine re-training of the Bayesian model if the posterior distribution obtained by using the Bayesian model cannot satisfy both a predetermined acceptance rate (for example, 0.2 <= acceptance rate <= 0.5) and a predetermined autocorrelation (for example, 50% of the sample is within 95% of the credible interval).

According to various embodiments, the processor 110 may train the Bayesian model repeatedly based on the new training data sampled in the historical data of the target sensor, the posterior distribution of the historical data of the target sensor, the historical data of the reference sensor, and the prior distribution of the historical data of the reference sensor, until the posterior distribution obtained by using the Bayesian model satisfies both the predetermined acceptance rate (for example, 0.2 <= acceptance rate <= 0.5) and the predetermined autocorrelation (for example, 50% of the sample is within 95% of the credible interval).

According to various embodiments, the processor 110 may stop training of the Bayesian model if the posterior distribution obtained by using the Bayesian model satisfies both the predetermined acceptance rate (for example, 0.2 <= acceptance rate <= 0.5) and the predetermined autocorrelation (for example, 50% of the sample is within 95% of the credible interval).

iii) Determining a degree of a polynomial regression model

According to various embodiments, the processor 110 may divide the historical data of the target sensor and the historical data of the reference sensor into a training data set and a validation data set.

According to various embodiments, the processor 110 may set a range for exploring a degree of a polynomial regression model as per [Equation 1] below. The degree of a polynomial regression model refers to a degree of polynomial function used in the polynomial regression model. In this instance, the degree may extend from the first to the tenth, but the degree is not limited thereto.

【Equation 1】

$$\mu = c1 + c2 \times x + c3 \times x^2 + \cdots + cn \times x^{n-1} + \sigma$$

Herein, $c1$, $c2$, $c3$, ... $cn$ are regression coefficients and $\sigma$ is an error term. According to various embodiments, the processor 110 may generate a polynomial regression model for each degree with the training data.

According to various embodiments, the processor 110 may calculate a root mean square error (hereinafter referred to as "RMSE") of the polynomial regression model for each degree, modeled with the training data, by using validation data.

According to various embodiments, the processor 110 may store the difference if the difference between a RMSE of the previous degree and a RMSE of the current degree is smaller than "0".

According to various embodiments, the processor 110 may store "0" if the difference between a RMSE of the previous degree and a RMSE of the current degree is greater than "0".

According to various embodiments, the processor 110 may normalize each difference by dividing each difference with a sum of all differences.

According to various embodiments, the processor 110 may determine the cumulative sum as a proper degree of the polynomial regression model if the cumulative sum is equal to or greater than a preset threshold value. For example, the threshold value may be 0.7, but is not limited thereto.

iv) Inferring the posterior distribution of the data of the target sensor

According to various embodiments, the processor 110 may set a prior distribution of a coefficient and a standard deviation based on the determined degree of the polynomial regression model.

According to various embodiments, the processor 110 may determine regression coefficients of the initial polynomial regression equation as mean values of the prior distributions of the regression coefficients.

According to various embodiments, the processor 110 may infer the posterior distributions of the regression coefficients and the error term of the regression curve representing the correlation between the historical data of the target sensor and the historical data of the reference sensor, by inputting the set prior distribution, the historical data of the target sensor, and the historical data of the reference sensor into the Bayesian model.

According to various embodiments, the processor 110 may infer the regression coefficients of the polynomial regression model based on the posterior distributions of the regression coefficients and the error term of the regression curve representing the correlation between the historical data of the target sensor and the historical data of the reference sensor.

v) Attuning control lines

According to various embodiments, the processor 110 may adjust control lines for the correlation in response to changes in the conditions associated with the apparatus collecting data from the target sensor (repair, seasonal factor, deterioration, etc.). Here control lines are upper limits or lower limits to determine whether a target sensor is normal or abnormal.

According to various embodiments, the processor 110 may update the posterior distribution of the polynomial regression model so that the control lines can be attuned.

According to various embodiments, the processor 110 may update the posterior distribution of the polynomial regression model by using the Bayesian sampling inference on the polynomial regression model by setting the posterior distribution of the previous model as the prior distribution. Here, the posterior distributions of the previous model may mean the posterior distributions of the regression coefficients and the error term (standard deviation) constituting the control line, but the meaning thereof is not limited thereto.

According to various embodiments, the processor 110 may set a likelihood function. At this time, the likelihood function may be a normal distribution function, but is not limited thereto.

According to various embodiments, the processor 110 may set a likelihood function. At this time, the likelihood function may be a function corresponding to the historical data of the target sensor, but is not limited thereto.

According to various embodiments, the processor 110 may input the posterior distribution of the coefficient and the standard deviation of a previous polynomial regression model, along with the determined likelihood function, into the Bayesian model so as to substitute the prior distribution of the coefficient and standard deviation set based on the determined degree of the polynomial regression model.

vi) Validating the posterior distribution

According to various embodiments, the processor 110 may validate the posterior distributions of the regression coefficients and the error term of the regression curve representing the correlation between the historical data of the target sensor and the historical data of the reference sensor based on a preset method.

According to various embodiments, the processor 110 may validate convergence of the posterior distribution based on an ESS (Effective Sample Size) value (for example, ESS > 500) and a R-hat value after Burn-in and Thinning (for example, 0.95 < R-hat < 1.05). Here, R-hat is a potential scale reduction factor which is 1 in the convergence state.

According to various embodiments, the processor 110 may re-validate the posterior distributions of the regression coefficients and the error term of the regression curve representing the correlation between the historical data of the target sensor and the historical data of the reference sensor after increasing the sample size as much as the initial sample size, if the posterior distributions of the regression coefficients and the error term of the regression curve representing the correlation between the historical data of the target sensor and the historical data of the reference sensor does not converge to the reference (the R-hat value(for example, 0.95 < R-hat < 1.05) and the ESS value (for example, ESS > 500)).

According to various embodiments, the processor 110 may dump a sample before the burn-in if the sample size is increased, and may continue the Markov chain from a sample provided immediately after the burn-in period of the increased sample size. Here, burn-in period is a period affected by initial value or initial condition.

According to various embodiments, the processor 110 may estimate the posterior distributions of the regression coefficients and the error term of the regression curve representing the correlation between the historical data of the target sensor and the historical data of the reference sensor, by means of the Markov chain having the lowest MCSE (Monte Carlo Standard Error) value, if the posterior distributions of the regression coefficients and the error term of the regression curve representing the correlation between the historical data of the target sensor and the historical data of the reference sensor converges to the reference (the R-hat value(for example, 0.95 < R-hat < 1.05) and the ESS value (for example, ESS > 500)).

vii) Setting control lines

According to the invention, the processor 110 sets a targeted credible interval with respect to the inferred posterior distributions of the regression coefficients and the error term of the regression curve representing the correlation between the historical data of the target sensor and the historical data of the reference sensor, and set control lines for data of the target sensor by using the set credible interval.

According to various embodiments, the processor 110 may set a certain percentage (%) (for example, 50%, 95%) of a region of the posterior distributions of the regression coefficients and the error term of the regression curve representing the correlation between the historical data of the target sensor and the historical data of the reference sensor. The certain percentage of the region is designated as a credible interval. Here, the certain percentage (%) of a region of the posterior distributions of the regression coefficients and the error term of the regression curve representing the correlation between the historical data of the target sensor and the historical data of the reference sensor relates to a highest posterior density (hereinafter referred to as a "HPD") value, which may change depending on circumstances.

According to the invention, the processor 110 sets control lines of the data of the target sensor by using boundary values of the posterior distributions of the regression coefficients and the error term of the regression curve representing the correlation between the historical data of the target sensor and the historical data of the reference sensor. The control lines correspond to a lower limit and an upper limit of the set credible interval.

According to various embodiments, the processor 110 may set probabilistic control lines based on the posterior distributions of the regression coefficients and the error term of the regression curve representing the correlation between the historical data of the target sensor and the historical data of the reference sensor and HPD statistics. Here, since the posterior distributions of the regression coefficients and the error term of the regression curve representing the correlation between the historical data of the target sensor and the historical data of the reference sensor includes the mean value and the standard deviation, the processor 110 may set control lines of the data of the target sensor by setting a certain percentage as the credible interval with respect to the posterior distribution of each of the mean value and the standard deviation, and combining the value of the posterior distributions of the regression coefficients and the error term of the regression curve representing the correlation between the historical data of the target sensor and the historical data of the reference sensor. Thus, the control lines correspond to a lower limit and an upper limit of the credible interval with the specified percentage.

According to various embodiments, the processor 110 may set a safe region, an attention region, and the control lines, by using the HPD value having a preset percentage (for example, 25%, 75%, 2.5%, 97.5%) based on a median value of the posterior distributions of the regression coefficients and the error term of the regression curve representing the correlation between the historical data of the target sensor and the historical data of the reference sensor.

According to various embodiments, the processor 110 may set a region of the posterior distributions of the regression coefficients and the error term of the regression curve representing the correlation between the historical data of the target sensor and the historical data of the reference sensor. The region is considered the safe region, and is characterized by a mean value and a standard deviation that satisfy [Equation 2] and [Equation 3], respectively.

【Equation 2】

$$\breve{\mu}_{hpd25\%} \leq \breve{\mu}_{CI50\%} \leq \breve{\mu}_{hpd75\%}$$

【Equation 3】

$$\breve{\mu}_{hpd25\%} - 3\breve{\sigma}_{hpd75\%} \leq \breve{X}_{CI50\%} \leq \breve{\mu}_{hpd75\%} + 3\breve{\sigma}_{hpd75\%}$$

In Equations 2 and 3, $\breve{\mu}_{CI50\%}$ and $\breve{X}_{CI50\%}$ represent the mean value and the standard deviation, respectively, at 50% credible interval. $\breve{\mu}_{CI50\%}$ refers to 50% credible interval of a dependent variable of the regression, and $\breve{X}_{CI50\%}$ represents the standard deviationa generated by combining the HPD statistics. $\breve{\mu}_{hpd75\%}$ and $\breve{\mu}_{hpd25\%}$ represent the upper and lower limits of the mean of the safe region, respectively. $\breve{\mu}_{hpd75\%} + 3\breve{\sigma}_{hpd75\%}$ and $\breve{\mu}_{hpd25\%} - 3\breve{\sigma}_{hpd75\%}$ represent the upper and lower limits of the standard deviation of the safe region, respectively.

According to various embodiments, the processor 110 may set a region of the posterior distributions of the regression coefficients and the error term of the regression curve representing the correlation between the historical data of the target sensor and the historical data of the reference sensor. The region is considered the attention region, and is characterized by a mean value and a standard deviation that satisfy [Equation 4] and [Equation 5], respectively.

【Equation 4】

$$\breve{\mu}_{hpd2.5\%} \leq \breve{\mu}_{CI95\%} \leq \breve{\mu}_{hpd97.5\%}$$

【Equation 5】

$$\breve{\mu}_{hpd2.5\%} - 3\breve{\sigma}_{hpd97.5\%} \leq \breve{X}_{CI95\%} \leq \breve{\mu}_{hpd95\%} + 3\breve{\sigma}_{hpd97.5\%}$$

Here, $\breve{\mu}_{CI95\%}$ and $\breve{X}_{CI95\%}$ represent the mean value and the standard deviation, respectively, at 95% credible interval.

According to various embodiments, the processor 110 may set boundary values of a region of the posterior distributions of the regression coefficients and the error term of the regression curve representing the correlation between the historical data of the target sensor and the historical data of the reference sensor. The boundary values of the region are considered control lines comprising an upper control line and a lower control line, and are characterized by satisfying [Equation 6].

【Equation 6】

$$\breve{\mu}_{avg} - 3\breve{\sigma}_{avg} \leq \breve{X}_{CL} \leq \breve{\mu}_{avg} + 3\breve{\sigma}_{avg}$$

In Equation 6, $\breve{\mu}_{avg} + 3\breve{\sigma}_{avg}$ represents an upper control line, and $\breve{\mu}_{avg} - 3\breve{\sigma}_{avg}$ represents a lower control line. Here, $\breve{\mu}_{avg}$ is a mean of the posterior distribution and $\breve{\sigma}_{avg}$ is a standard deviation of the posterior distribution.

According to various embodiments, the processor 110 may determine that the target sensor is normal or the data of the target sensor are accurate, if the data of the target sensor exists in the safe region and the attention region which are between the upper and lower control lines.

According to various embodiments, the processor 110 may decide that the target sensor is abnormal (sensor is defective) or the data of the target sensor are inaccurate if the data of the target sensor exists in a region which is higher than an upper control line or a region which is lower than a lower control line.

viii) Validating the validity of the target sensor

According to various embodiments, the processor 110 may obtain current data of the target sensor through the input/output interface module 120.

According to the invention, the processor 110 compares the current data of the target sensor with the control lines to validate the validity of the target sensor.

According to various embodiments, the processor 110 may decide that the target sensor is valid (normal) if the current data of the target sensor exists in the safe region and the attention region which are between the control lines.

According to various embodiments, the processor 110 may decide that the target sensor is invalid (sensor is defective) if the current data of the target sensor exists in a region higher than the upper control line or in a region lower than the lower control line.

The input/output interface module 120 may be connected to an external device (for example, a server or sensor control device) through a network. The processor 110 controls the operational status of the sensor by transmitting a signal to the external device that manages the sensor. The operational status may include turning on/off the target sensor or determining the activity of sensor data collection from the target sensor.

The processor 110 may send a signal to the sensor for operational control. In this scenario, the sensor is equipped with a circuit capable of communication with the device 100.

The input/output interface module 120 may obtain data from an external device.

The input/output interface module 120 may obtain the historical data of the target sensor.

The input/output interface module 120 may obtain the historical data of the reference sensor.

The input/output interface module 120 may obtain the prior distribution of the historical data of the target sensor.

The input/output interface module 120 may obtain the prior distribution of the historical data of the reference sensor.

The input/output interface module 120 may obtain a user's input.

The input/output interface module 120 may output a result of determining the operational status of the target sensor.

The input/output interface module 120 may be integrally provided with the device 100 for determining the operational status of a sensor.

The input/output interface module 120 may be provided separately from the device 100 for determining the operational status of a sensor.

The input/output interface module 120 may be a separate device to be communicatively connected to the device 100 for determining the operational status of a sensor.

The input/output interface module 120 may include a port (for example, a USB port) for connecting to an external device.

The input/output interface module 120 may include a monitor, a touch screen, a mouse, an electronic pen, a microphone, a keyboard, a speaker, an earphone, a headphone, or a touch pad.

The processor 110 may inform an operator of a facility (e.g., a power plant) about the validity of the sensor through an output device, which includes the monitor, the speaker, etc., by displaying relevant information on the monitor, emitting audible alerts through the speaker, or employing other suitable means in order for the operator to promptly assess and respond to the sensor's status and take any necessary actions (e.g., replacing a defective sensor) to ensure the smooth operation of the facility.

The memory 130 may store data obtained through the input/output interface module 120.

The memory 130 may store data obtained by the processor 110.

The memory 130 may store the safe region set by the processor 110.

The memory 130 may store the attention region set by the processor 110.

The memory 130 may store the control lines set by the processor 110.

The memory 130 may store a result of determining the operational status of the target sensor.

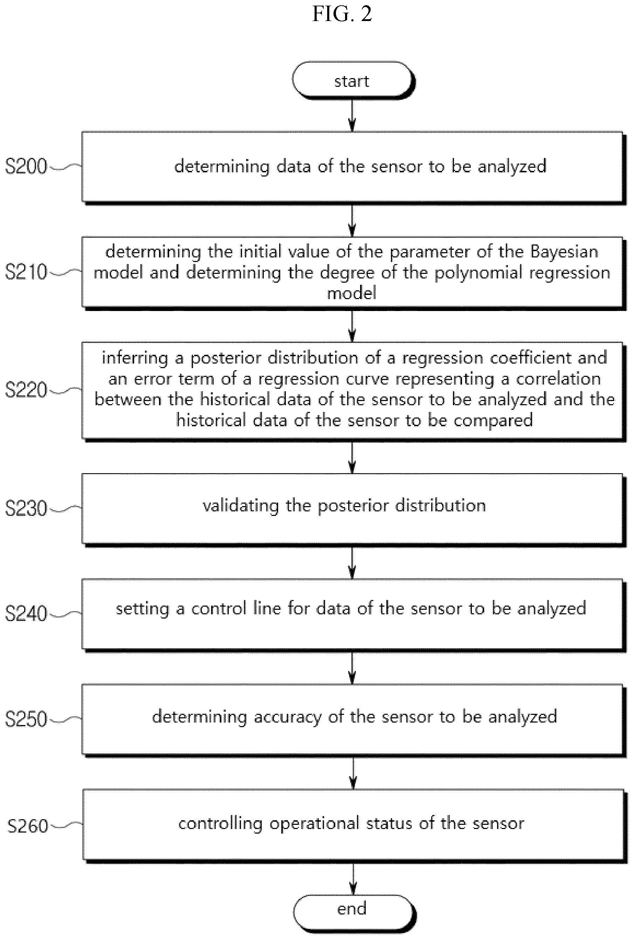

FIG. 2 is a flowchart explaining a method for determining the operational status of the sensor according to an embodiment of the present disclosure.

Referring to FIG. 2, the method for determining the operational status of the sensor includes determining data of the target sensor (S200), determining the initial value of the parameter of the Bayesian model and determining the degree of the polynomial regression model (S210), inferring posterior distributions of regression coefficients and an error term of a regression curve representing a correlation between the historical data of the target sensor and the historical data of the reference sensor (S220), validating the posterior distribution (S230), setting control lines for data of the target sensor (S240), , determining accuracy of the target sensor (S250) and control the operational status of the target sensor (S260).

In step of S200, the device 100 for determining the operational status of a sensor may obtain the historical data of the target sensor and the historical data of a plurality of sensors which are not selected as the target sensor.

In step of S200, the device 100 for determining the operational status of a sensor may determine data having high correlation with the historical data of the target sensor among the historical data of the plurality of sensors not selected as the target sensor using distance correlation, and decide the determined data as the data of the reference sensor.

In step of S200, the device 100 for determining the operational status of a sensor may set the prior distribution of the historical data of the target sensor. In this case, the prior distribution may be the prior distributions of the regression coefficients and the error term of the regression curve representing the correlation between the historical data of the target sensor and the historical data of the plurality of sensors not selected as the target sensor, though not limited thereto.

In step of S200, the device 100 for determining the operational status of a sensor may set the prior distribution of the historical data of the reference sensor. In this case, the prior distribution may be the prior distributions of the regression coefficients and the error term of the regression curve representing the correlation between the historical data of the target sensor and the historical data of the reference sensor, though not limited thereto.

In step of S210, the device 100 for determining the operational status of a sensor may perform sampling in the historical data of the target sensor, the prior distribution of the historical data of the target sensor, the historical data of the reference sensor, and the prior distribution of the historical data of the reference sensor.

In step of S210, the device 100 for determining the operational status of a sensor may train the Bayesian model based on training data sampled in the historical data of the target sensor, the prior distribution of the historical data of the target sensor, the historical data of the reference sensor, and the prior distribution of the historical data of the reference sensor.

In step of S210, the device 100 for determining the operational status of a sensor may train the Bayesian model repeatedly based on the new training data sampled in the historical data of the target sensor, the posterior distribution of the historical data of the target sensor, the historical data of the reference sensor, and the prior distribution of the historical data of the reference sensor, until the posterior distribution obtained by using the Bayesian model satisfies both a predetermined acceptance rate (for example, $0.2 <=$ acceptance rate $<= 0.5$) and a predetermined autocorrelation (for example, 50% of the sample is within 95% of the credible interval).

In step of S210, the device 100 for determining the operational status of a sensor may stop training of the Bayesian model if the posterior distribution obtained by using the Bayesian model satisfies both the predetermined acceptance rate (for example, $0.2 <=$ acceptance rate $<= 0.5$) and the predetermined autocorrelation (for example, 50% of the sample is within 95% of the credible interval).

In step of S210, the device 100 for determining the operational status of a sensor may set a range from the first to the tenth degree to investigate the polynomial regression degree of the polynomial regression equation..

In step of S210, the device 100 for determining the operational status of a sensor may model the polynomial regression model with the training data for each degree.

In step of S210, the device 100 for determining the operational status of a sensor may calculate a RMSE of the polynomial regression model, and determine a degree to be employed for the polynomial regression model by using the calculated RMSE.

In step of S220, the device 100 for determining the operational status of a sensor may set the prior distribution of the coefficient and the standard deviation based on the selected degree of the polynomial regression equation.

In step of S220, the device 100 for determining the operational status of a sensor may set the regression coefficients of the initial polynomial regression equation as mean values of the prior distributions of the regression coefficients.

In step of S220, the device 100 for determining the operational status of a sensor may infer the posterior distributions of the regression coefficients and the error term of the regression curve representing the correlation between the historical data of the target sensor and the historical data of the reference sensor, by inputting the set prior distribution, the historical data of the target sensor, and the historical data of the reference sensor into the optimized Bayesian model.

In step of S220, the device 100 for determining the operational status of a sensor may infer the regression coefficients of the polynomial regression model based on the posterior distribution of the regression coefficients and the error term of the regression curve representing the correlation between the historical data of the target sensor and the historical data of the reference sensor.

In step of S230, the device 100 for determining the operational status of a sensor may validate convergence based on an ESS value (for example, ESS > 500) and a R-hat value after Burn-in and Thinning (for example, $0.95 <$ R-hat $< 1.05$).

In step of S230, the device 100 for determining the operational status of a sensor may dump a sample before the burn-in if the draw size is increased, and may continue the Markov chain from a sample provided immediately after the burn-in period of the increased draw size.

In step of S230, the device 100 for determining the operational status of a sensor may estimate the posterior distribution of the parameters of the data of the target sensor by means of the Markov chain having the lowest MCSE value, if the posterior distributions of the regression coefficients and the error term of the regression curve representing the correlation between the historical data of the target sensor and the historical data of the reference sensor converges to a predetermined reference (the R-hat value(for example, $0.95 <$ R-hat $< 1.05$) and a predetermined ESS value (for example, ESS > 500)).

In step of S240, the device 100 for determining the operational status of a sensor may set a predetermined percentage (%)(for example, 50%, 95%) of a region of the posterior distributions of the regression coefficients and the error term of the regression curve representing the correlation between the historical data of the target sensor and the historical data of the reference sensor as a credible interval.

In step of S240, the device 100 for determining the operational status of a sensor may set the control lines of the data of the target sensor by using boundary values of the posterior distributions of the regression coefficients and the error term of the regression curve representing the correlation between the historical data of the target sensor and the historical data of the reference sensor. The control lines correspond to the upper and lower limits of a credible interval determined to be employed.

In step of S250, the device 100 for determining the operational status of a sensor may decide that the target sensor is valid (normal) if the current data of the target sensor exists in the safe region and the attention region which are between the control lines.

In step of S250, the device 100 for determining the operational status of a sensor may decide that the target sensor is invalid (sensor is defective) if the current data of the target sensor exists in a region higher than the upper control line or in a region lower than the lower control line.

In Step S260, the device 100 for determining the operational status of a sensor may control the operational status of the target sensor by transmitting a signal to the external device that manages the target sensor or by directly transmitting a signal to the target sensor.

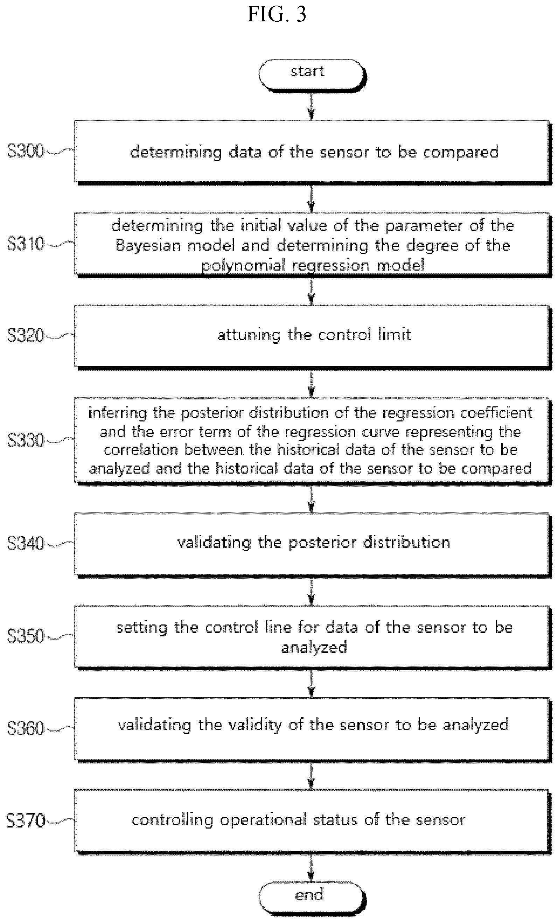

FIG. 3 is a flowchart explaining a method for determining the operational status of a sensor according to another embodiment of the present disclosure.

Referring to FIG. 3, the method for determining the operational status of the sensor includes determining data of the reference sensor (S300), determining the initial value of the parameter of the Bayesian model and determining the degree of the polynomial regression model (S310), attuning control lines (S320), inferring the posterior distributions of the regression coefficients and the error term of the regression curve representing the correlation between the historical data of the target sensor and the historical data of the reference sensor (S330), validating the posterior distribution (S340), setting the control lines for data of the target sensor (S350), determining the operational status of the target sensor (S360), and controlling operational status of the target sensor (S370).

In step of S300, the device 100 for determining the operational status of a sensor may obtain the historical data of the target sensor and the historical data of a plurality of sensors which are not selected as the target sensor.

In step of S300, the device 100 for determining the operational status of a sensor may determine data having high correlation with the historical data of the target sensor among the historical data of the plurality of sensors not selected as the target sensor using distance correlation, and decide the determined data as the data of the reference sensor.

In step of S300, the device 100 for determining the operational status of a sensor may set a prior distribution of the historical data of the target sensor. In this case, the prior distribution may be the prior distributions of the regression coefficients and the error term of a regression curve representing the correlation between the historical data of the target sensor and the historical data of the plurality of sensors not selected as the target sensor, though not limited thereto.

In step of S300, the device 100 for determining the operational status of a sensor may set the prior distribution of the historical data of the reference sensor. In this case, the prior distribution may be the prior distributions of the regression coefficients and the error term of the regression curve representing the correlation between the historical data of the target sensor and the historical data of the reference sensor, though not limited thereto.

In step of S310, the device 100 for determining the operational status of a sensor may perform sampling in the historical data of the target sensor, the prior distribution of the historical data of the target sensor, the historical data of the reference sensor, and the prior distribution of the historical data of the reference sensor.

In step of S310, the device 100 for determining the operational status of a sensor may train the Bayesian model based on training data generated by the sampling performed in the historical data of the target sensor, the prior distribution of the historical data of the target sensor, the historical data of the reference sensor, and the prior distribution of the historical data of the reference sensor.

In step of S310, the device 100 for determining the operational status of a sensor may train the Bayesian model repeatedly based on the new training data sampled in the historical data of the target sensor, the posterior distribution of the historical data of the target sensor, the historical data of the reference sensor, and the prior distribution of the historical data of the reference sensor, until the posterior distribution obtained by using the Bayesian model satisfies both a predetermined acceptance rate (for example, 0.2 <= acceptance rate <= 0.5) and a predetermined autocorrelation (for example, 50% of the sample is within 95% of the credible interval).

In step of S310, the device 100 for determining the operational status of a sensor may stop training of the Bayesian model if the posterior distribution obtained by using the Bayesian model satisfies both the predetermined acceptance rate (for example, 0.2 <= acceptance rate <= 0.5) and the predetermined autocorrelation (for example, 50% of the sample is within 95% of the credible interval).

In step of S310, the device 100 for determining the operational status of a sensor may set a range from the first to the tenth degree to investigate the polynomial regression degree of the polynomial regression equation..

In step of S310, the device 100 for determining the operational status of a sensor may model the polynomial regression model with the training data by each degree.

In step of S310, the device 100 for determining the operational status of a sensor may calculate a RMSE of the polynomial regression model, and determine a proper degree of the polynomial regression model by using the calculated RMSE.

In step of S320, the device 100 for determining the operational status of a sensor may update the control lines of the correlation as a condition to which a device for obtaining the data by the target sensor belongs changes (repair, seasonal factor, deterioration, etc.).

In step of S320, the device 100 for determining the operational status of a sensor may update the posterior distribution of the polynomial regression model so that the control lines can be attuned.

In step of S320, the device 100 for determining the operational status of a sensor may update the posterior distribution of the polynomial regression model by using the Bayesian sampling inference on the polynomial regression model by setting the posterior distribution of a previous model as the prior distribution. Here, the posterior distribution of the previous model may mean the posterior distributions of the regression coefficients and the error term (standard deviation) constituting the control lines, but the meaning thereof is not limited thereto.

In step of S320, the device 100 for determining the operational status of a sensor may set a proper likelihood function. At this time, the proper likelihood function may be a normal distribution function, but is not limited thereto.

In step of S320, the device 100 for determining the operational status of a sensor may input the posterior distribution of the coefficient and the standard deviation of the previous model, which has replaced the prior distribution of the coefficient and the standard deviation set based on the determined degree of the polynomial regression model, and the set likelihood function into the Bayesian model so as to replace the prior distribution of the coefficient and standard deviation set based on the determined degree of the polynomial regression model.

In step of S330, the device 100 for determining the operational status of a sensor may set the prior distribution of the coefficient and the standard deviation based on the determined degree of the polynomial regression equation.

In step of S330, the device 100 for determining the operational status of a sensor may infer the posterior distributions of the regression coefficients and the error term of the regression curve representing the correlation between the historical data of the target sensor and the historical data of the reference sensor, by inputting the set prior distribution, the historical data of the target sensor, and the historical data of the reference sensor into the optimized Bayesian model.

In step of S330, the device 100 for determining the operational status of a sensor may infer the regression coefficients of the polynomial regression model based on the posterior distributions of the regression coefficients and the error term of the regression curve representing the correlation between the historical data of the target sensor and the historical data of the reference sensor.

In step of S340, the device 100 for determining the operational status of a sensor may validate convergence based on an ESS value (for example, ESS > 500) and a R-hat value after Burn-in and Thinning (for example, 0.95 < R-hat < 1.05).

In step of S340, the device 100 for determining the operational status of a sensor may dump a sample before the burn-in if the draw size is increased, and may continue a Markov chain from a sample provided immediately after the burn-in period of an increased draw size.

In step of S340, the device 100 for determining the operational status of a sensor may estimate the posterior distribution of the parameters of the data of the target sensor by means of the Markov chain having the lowest MCSE value, if the posterior distributions of the regression coefficients and the error term of the regression curve representing the correlation between the historical data of the target sensor and the historical data of the reference sensor converges to the reference (the R-hat value(for example, 0.95 < R-hat < 1.05) and the ESS value (for example, ESS > 500)).

In step of S350, the device 100 for determining the operational status of a sensor may set a certain percentage (%) (for example, 50%, 95%) of a region of the posterior distributions of the regression coefficients and the error term of the regression curve representing the correlation between the historical data of the target sensor and the historical data of the reference sensor as a credible interval.

In step of S350, the device 100 for determining the operational status of a sensor may set the control lines of the data of the target sensor by using a boundary value of the posterior distributions of the regression coefficients and the error term of the regression curve representing the correlation between the historical data of the target sensor and the historical data of the reference sensor.

In step of S360, the device 100 for determining the operational status of a sensor may decide that the target sensor is valid (normal) if the current sensor data of the target sensor exists in the safe region and the attention region which are between the control lines.

In step of S360, the device 100 for determining the operational status of a sensor may decide that the target sensor is invalid (sensor is defective) if the current data of the target sensor exists in a region higher than the upper control line or in a region lower than the lower control line.

In Step S370, the device 100 for determining the operational status of a sensor may control the operational status of the target sensor by transmitting a signal to the external device that manages the target sensor or by directly transmitting a signal to the target sensor.

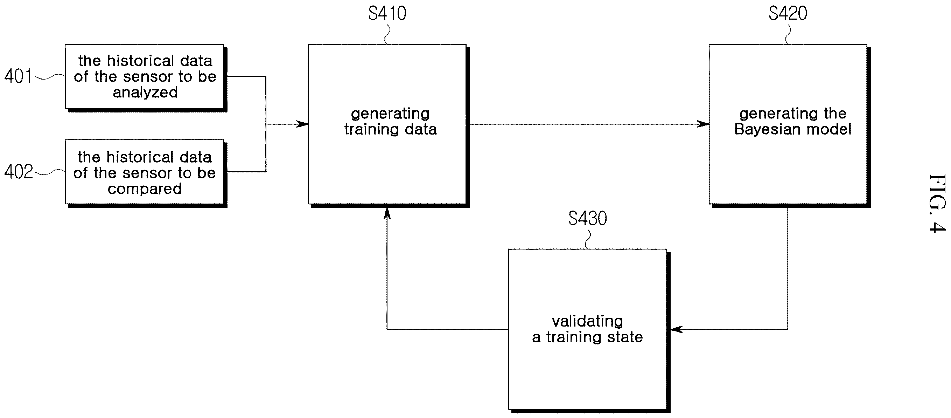

FIG. 4 is a flowchart explaining a method for optimizing initial values of parameters of the polynomial regression model by the device 100 for determining the operational status of a sensor according to an embodiment of the present disclosure.

Referring to FIG. 4, the device 100 for determining the operational status of a sensor may obtain historical data of a target sensor 401 and historical data of a reference sensor 402.

According to various embodiments, in step of S410, the device 100 for determining the operational status of a sensor may set a prior distribution of the historical data of the target sensor. In this case, the prior distribution may be the prior distributions of the regression coefficients and the error term of the regression curve representing the correlation between the historical data of the target sensor and the historical data of the plurality of sensors not selected as the target sensor, though not limited thereto.

According to various embodiments, in step of S410, the device 100 for determining the operational status of a sensor may set the prior distribution of the historical data of the reference sensor. In this case, the prior distribution may be the prior distributions of the regression coefficients and the error term of the regression curve representing the correlation between the historical data of the target sensor and the historical data of the reference sensor, though not limited thereto.

According to various embodiments, in step of S410, the device 100 for determining the operational status of a sensor may generate training data by performing sampling in the historical data of the target sensor, the prior distribution of the historical data of the target sensor, the historical data of the reference sensor, and the prior distribution of the historical data of the reference sensor.

According to various embodiments, in step of S410, the device 100 for determining the operational status of a sensor may calculate a likelihood, also referred to as a likelihood function, using historical data of the target sensor. The likelihood calculation is well known to person in the skilled in this field and therefore, a detailed description thereof will be omitted.

According to various embodiments, in step of S420, the device 100 for determining the operational status of a sensor may obtain a posterior distribution of the historical data of the target sensor and the historical data of the reference sensor based on the training data generated by means of sampling.

According to various embodiments, the posterior distributions of the regression coefficients and the error term of the regression curve representing the correlation between the historical data of the target sensor and the historical data of the reference sensor which is obtained by the device 100 for determining the operational status of a sensor may be expressed by using the following [Equation 7] based on the training data, the likelihood of the historical data of the target sensor, the likelihood of the historical data of the reference sensor, the set prior distribution of the historical data of the target sensor, and the set prior distribution of the historical data of the reference sensor.

【Equation 7】

$$P(H|D) = \frac{P(D|H)P(H)}{P(D)}$$

Here, $P(H|D)$ is the posterior distribution, $P(D|H)$ is the likelihood, $P(H)$ is the prior distribution of the data, and $P(D)$ is a probability over the data.

According to various embodiments, in step of S430, the device 100 for determining the operational status of a sensor may validate a training state of the Bayesian model by comparing the posterior distribution obtained by using the Bayesian model with a preset reference value. At this time, the preset reference value may be an acceptance rate and autocorrelation, but is not limited thereto.

According to various embodiments, in step of S430, the device 100 for determining the operational status of a sensor may determine re-training of the Bayesian model if the posterior distribution obtained by using the Bayesian model cannot satisfy both an acceptance rate (for example, 0.2 <= acceptance rate <= 0.5) and an autocorrelation (for example, 50% of the sample is within 95% of the credible interval).

According to various embodiments, in step of S430, the device 100 for determining the operational status of a sensor may train the Bayesian model repeatedly based on the new training data sampled in the historical data of the target sensor, the posterior distribution of the historical data of the target sensor, the historical data of the reference sensor, and the prior distribution of the historical data of the reference sensor, until the posterior distribution obtained by using the Bayesian model satisfies both the acceptance rate (for example, 0.2 <= acceptance rate <= 0.5) and the autocorrelation (for example, 50% of the sample is within 95% of the credible interval).

According to various embodiments, in step of S430, the device 100 for determining the operational status of a sensor may stop training of the Bayesian model if the posterior distribution obtained by using the Bayesian model satisfies both the acceptance rate (for example, 0.2 <= acceptance rate <= 0.5) and the autocorrelation (for example, 50% of the sample is within 95% of the credible interval).

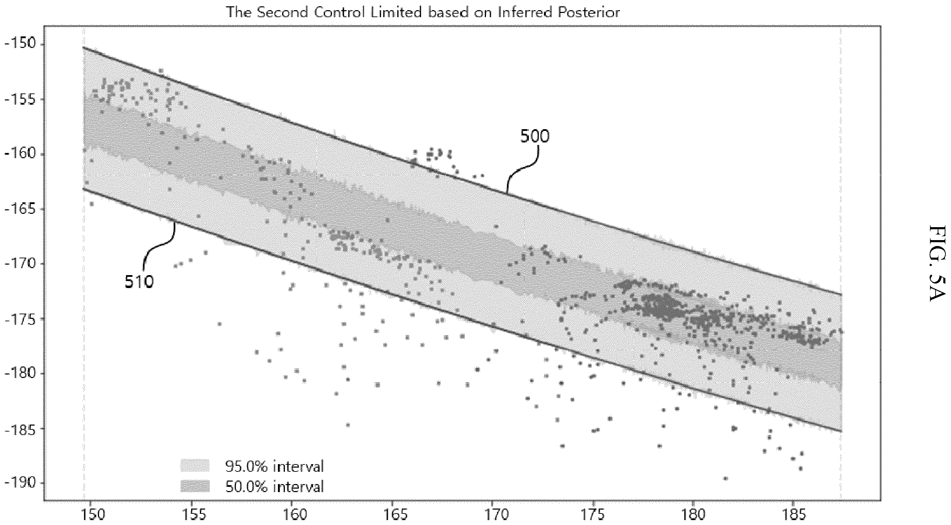

FIGS. 5A to 5C are views exemplarily showing the a region, an attention region, and control lines according to an embodiment of the present disclosure.

Referring to FIG. 5A, upper and lower control lines are illustrated in FIG. 5A.

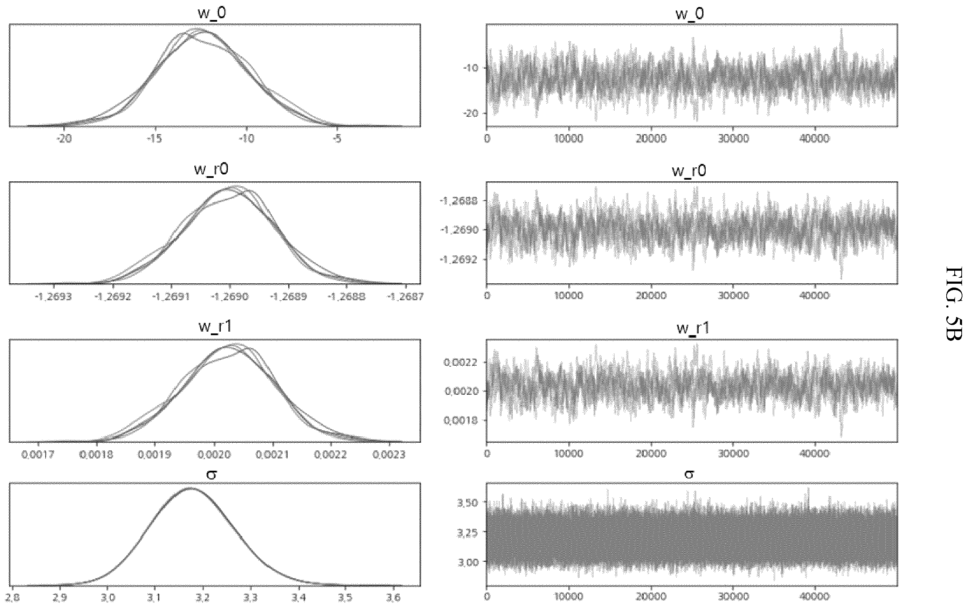

A region illustrated at a center of FIG. 5A shows an expected value of the posterior distribution of the mean in FIG. 5B.

In FIG. 5A, a line 500 represents $\check{\mu}_{avg} + 3\check{\sigma}_{avg}$ which is an upper control line in [Equation 8] below, and a line 510 represents $\check{\mu}_{avg} - 3\check{\sigma}_{avg}$ which is a lower control line in [Equation 8] below.

【Equation 8】

$$\check{\mu}_{avg} - 3\check{\sigma}_{avg} \leq \check{X}_{CL} \leq \check{\mu}_{avg} + 3\check{\sigma}_{avg}$$

FIG. 5B shows examples of graphs of the posterior distributions of regression coefficients ($w_0$, $w_{r0}$, $w_{r1}$) and the error term ($\sigma$) in the equation $Y = w_0 + w_{r0}x + w_{r1}x^2 + \sigma$.

Referring to FIG. 5B, the graphs on the left column show the posterior distributions of regression coefficients and the error term, and the graphs on the right column show examples of the samples obtained by the Bayesian sampling inference.

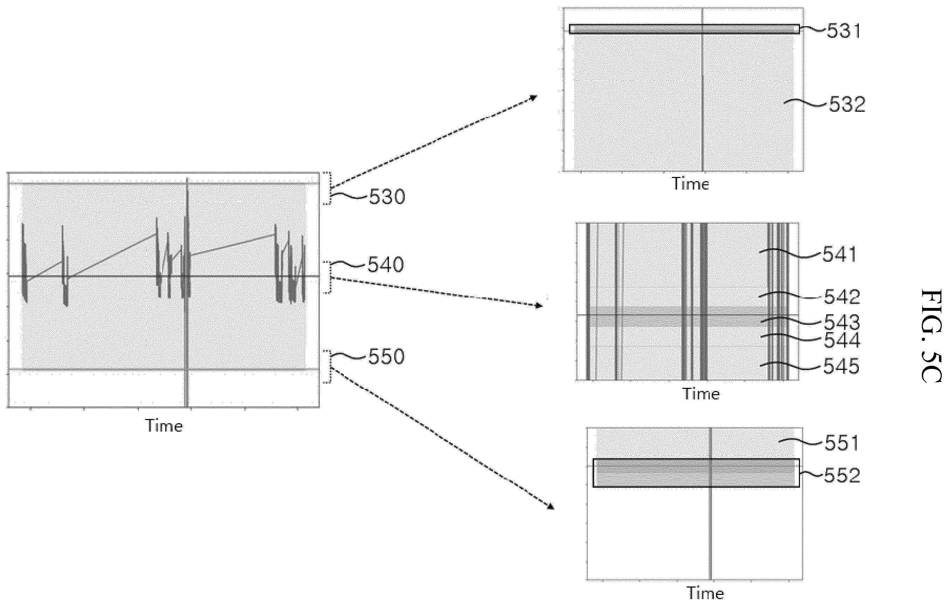

FIG. 5C illustrates a region corresponding to Equations 9-13.

【Equation 9】

$$\check{\mu}_{hpd25\%} \leq \check{\mu}_{CI50\%} \leq \check{\mu}_{hpd75\%}$$

【Equation 10】

$$\check{\mu}_{hpd25\%} - 3\check{\sigma}_{hpd75\%} \leq \check{X}_{CI50\%} \leq \check{\mu}_{hpd75\%} + 3\check{\sigma}_{hpd75\%}$$

【Equation 11】

$$\check{\mu}_{hpd2.5\%} \leq \check{\mu}_{CI95\%} \leq \check{\mu}_{hpd97.5\%}$$

【Equation 12】

$$\check{\mu}_{hpd2.5\%} - 3\check{\sigma}_{hpd97.5\%} \leq \check{X}_{CI95\%} \leq \check{\mu}_{97.5\%} + 3\check{\sigma}_{hpd97.5\%}$$

【Equation 13】

$$\check{\mu}_{avg} - 3\check{\sigma}_{avg} \leq \check{X}_{CL} \leq \check{\mu}_{avg} + 3\check{\sigma}_{avg}$$

Referring to FIG. 5C, the graph located at the top of the right column provides an enlarged view of the graph situated in the left column, specifically at section 530 at time t. 531 represents the upper control line ($\check{\mu}_{avg} + 3\check{\sigma}_{avg}$) and an upper limit of the standard deviation of the attention region ($\check{\mu}_{97.5\%} + 3\check{\sigma}_{avg97.5\%}$). In addition, 532 represents part of the upper limit of the standard deviation of the safe region ($\breve{\mu}_{hpd75\%}$ + $3\breve{\sigma}_{hpd75\%}$).

The graph located at the middle of the right column provides an enlarged view of the graph situated in the left column, specifically at section 540 at time t. 541 represents part of the upper limit of the standard deviation of the safe region ($\breve{\mu}_{hpd75\%}$ + $3\breve{\sigma}_{hpd75\%}$), and 542 and 544 represent the upper limit ($\breve{\mu}_{hpd97.5\%}$)(542) and the lower limit of the mean ($\breve{\mu}_{hpd2.5\%}$)(544) of a mean of the attention region. In addition, 545 represents part of the lower limit of the standard deviation of the safe region ($\breve{\mu}_{hpd2.5\%}$) - $3\breve{\sigma}_{hpd97.5\%}$). 543 represents [Equation 13].

The graph located at the bottom of the right column provides an enlarged view of the graph situated in the left column, specifically at section 550 at time t. 551 represents part of the lower limit of the standard deviation of the safe region ($\breve{\mu}_{hpd}25\%$ - $3\breve{\sigma}_{hpd75\%}$). In addition, 552 represents part of the lower control line ($\breve{\mu}_{avg}$ - $3\breve{\sigma}_{avg}$) and the lower limit of the standard deviation of the attention region ($\breve{\mu}_{hpd2.5\%}$ - $3\breve{\sigma}_{hpd97.5\%}$).

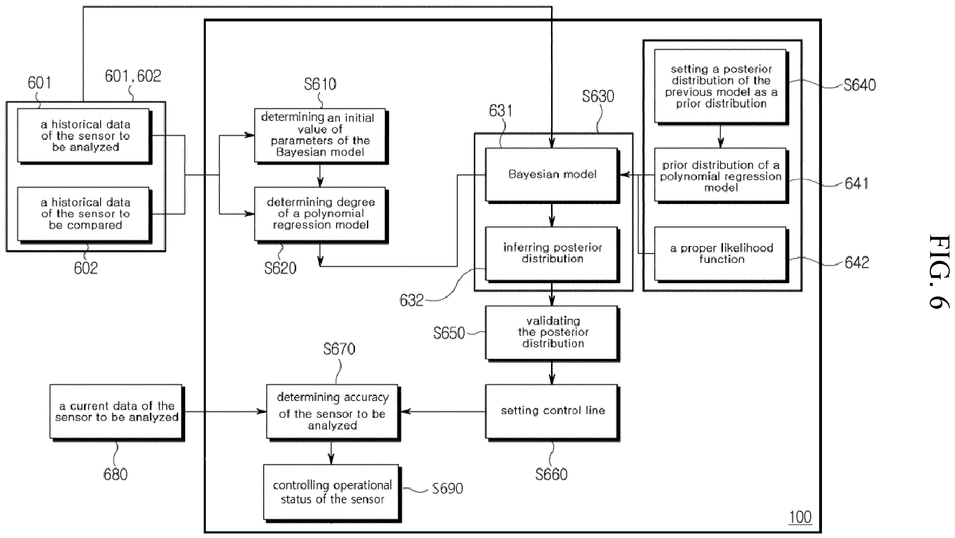

FIG. 6 is a flowchart explaining a method for determining the operational status of the sensor to which the polynomial regression model is applied according to an embodiment of the present disclosure.

Referring to FIG. 6, the device 100 for determining the operational status of a sensor may determine (S610) the initial value of the parameter of the Bayesian model by obtaining the historical data of the target sensor 601 and the historical data of the reference sensor 602.

According to various embodiments, the device 100 for determining the operational status of a sensor may determine (S620) the degree of the polynomial regression model by obtaining the historical data of the target sensor 601, the historical data of the reference sensor 602.

According to various embodiments, the device 100 for determining the operational status of a sensor may infer (S630) the posterior distributions 632 of the regression coefficients and the error term of the regression curve representing the correlation between the historical data of the target sensor and the historical data of the reference sensor, by inputting the prior distribution of the coefficient and the standard deviation set based on the degree of the polynomial regression model, the historical data of the target sensor, and the historical data of the reference sensor into the optimized Bayesian model 631.

According to various embodiments, the device 100 for determining the operational status of a sensor may set the prior distribution of the coefficient and the standard deviation set based on the degree of the polynomial regression model with the posterior distribution of the previous model 641, and attune the control lines by setting a proper likelihood function 642 (S640).

According to various embodiments, the device 100 for determining the operational status of a sensor may validate convergence based on an ESS (Effective Sample Size) value (for example, ESS > 500) and a R-hat value after Burn-in and Thinning (for example, 0.95 < R-hat < 1.05) (S650).

According to various embodiments, the device 100 for determining the operational status of a sensor may set a targeted credible interval with respect to the inferred posterior distributions of the regression coefficients and the error term of the regression curve representing the correlation between the historical data of the target sensor and the historical data of the reference sensor, and set the control lines of the data of the target sensor by using the set credible interval (S660).

According to various embodiments, the device 100 for determining the operational status of a sensor may determine the accuracy of the target sensor by comparing the current data of the target sensor 680 with the set control lines (S670).

According to various embodiments, the device 100 for determining the operational status of a sensor may control the operational status of the target sensor (S690).

While the present disclosure has been described with reference to the exemplary embodiment shown in the drawings, this is merely illustrative, and it will be understood by those skilled in the art that various modifications are available. Therefore, the true technical scope of the present disclosure should be determined by appended claims.

**Claims**

**1.** A device (100) for determining an operational status of a sensor, comprising:

at least one processor (110), and
at least one memory (130) coupled to the at least one processor (110), wherein the at least one memory (130) is configured to provide the at least one processor (110) with instructions which, when executed, causes the at least one processor (110) to:

determine initial values of parameters of a Bayesian model and a degree of a polynomial regression model based on historical data of a target sensor and historical data of a reference sensor;
infer posterior distributions of regression coefficients and an error term of a regression curve representing a correlation between the historical data of the target sensor and the historical data of the reference sensor using the polynomial regression model and the Bayesian model;

set a credible interval based on the posterior distributions of the regression coefficients and the error term of the regression curve, and set control lines of data of the target sensor using the credible interval, wherein the control lines are upper limits or lower limits to determine whether the target sensor is normal or abnormal;

determine an accuracy of the target sensor based on current data of the target sensor and the control lines; and

control an operational status of the target sensor based on the accuracy.

2. The device (100) of claim 1,
wherein the at least one processor (110) is further configured to determine the historical data of the reference sensor using a distance correlation between the historical data of the target sensor and historical data of a plurality of sensors not selected as the target sensor.

3. The device (100) of claim 1 or 2,

wherein, in order to update the posterior distributions of the regression coefficients and the error term of the regression curve, the at least one processor (110) is further configured to set the inferred posterior distribution of the polynomial regression model to a prior distribution of the polynomial regression model, and set a likelihood function.

4. The device (100) of any of claims 1 to 3,
wherein the at least one processor (110) is further configured to validate the posterior distributions of the regression coefficients and the error term of the regression curve based on a an R-hat value and an effective sample size.

5. The device (100) of any of claims 1 to 4,
wherein the at least one processor (110) is further configured to:

set the credible interval based on a highest posterior density value having a preset percentage of expected values of the posterior distributions of the regression coefficients and the error term of the regression curve, and set the control lines of the data of the target sensor using lower and upper boundary values of the posterior distributions of the regression coefficients and the error term of the regression curve, with the lower and upper boundary values corresponding to lower and upper limits of the credible interval, respectively.

6. A computer-implemented method for determining an operational status of a sensor, comprising:

determining initial values of parameters of a Bayesian model and a degree of a polynomial regression model based on historical data of a target sensor and historical data of a reference sensor;

inferring posterior distributions of regression coefficients and an error term of a regression curve representing a correlation between the historical data of the target sensor and the historical data of the reference sensor using the polynomial regression model and the Bayesian model;

setting a credible interval based on the posterior distributions of the regression coefficients and the error term of the regression curve, and setting control lines of data of the target sensor using the credible interval, wherein the control lines are upper limits or lower limits to determine whether the target sensor is normal or abnormal;

determining an accuracy of the target sensor based on current data of the target sensor and the control lines; and

controlling an operational status of the target sensor based on the accuracy.

7. The method of claim 6, further comprising:
determining the historical data of the reference sensor using a distance correlation between the historical data of the target sensor and historical data of a plurality of sensors not selected as the target sensor.

8. The method of claim 6 or 7,
wherein the inferring of the posterior distributions of the regression coefficients and the error term of the regression curve comprises:

setting the inferred posterior distribution of the polynomial regression model to a prior distribution of the polynomial regression model, and setting a likelihood function.

**9.** The method of any of claims 6 to 8,
wherein the inferring of the posterior distributions of the regression coefficients and the error term of the regression curve comprises:
validating the posterior distributions of the regression coefficients and the error term of the regression curve based on an R-hat value and an effective sample size.

**10.** The method of any of claims 6 to 9,
wherein the setting of the control lines of the data of the target sensor comprises:

setting the credible interval based on a highest posterior density value having a preset percentage of an expected value of the posterior distributions of the regression coefficients and the error term of the regression curve; and setting the control lines of the data of the target sensor using lower and upper boundary values of the posterior distributions of the regression coefficients and the error term of the regression curve, with the lower and upper boundary values corresponding to lower and upper limits of the credible interval.

**11.** A non-transitory computer-readable storage medium storing instructions of executing the method of any of claims 6 to 10.

**Patentansprüche**

**1.** Einrichtung (100) zum Bestimmen eines Betriebszustands eines Sensors, umfassend:

mindestens einen Prozessor (110), und
mindestens einen Speicher (130), der mit dem mindestens einen Prozessor (110) gekoppelt ist, wobei der mindestens eine Speicher (130) konfiguriert ist, um dem mindestens einen Prozessor (110) Anweisungen bereitzustellen, die, wenn sie ausgeführt werden, den mindestens einen Prozessor (110) veranlassen zum:

Bestimmen von Anfangswerten von Parametern eines Bayes'schen Modells und eines Grads eines Polynomregressionsmodells basierend auf historischen Daten eines Zielsensors und historischen Daten eines Referenzsensors;
Ableiten von posterioren Verteilungen von Regressionskoeffizienten und eines Fehlerterms einer Regressionskurve, die eine Korrelation zwischen den historischen Daten des Zielsensors und den historischen Daten des Referenzsensors darstellt, unter Verwendung des Polynomregressionsmodells und des Bayes'schen Modells;
Setzen eines Glaubwürdigkeitsintervalls basierend auf den posterioren Verteilungen der Regressionskoeffizienten und dem Fehlerterm der Regressionskurve und Setzen von Kontrolllinien von Daten des Zielsensors unter Verwendung des Glaubwürdigkeitsintervalls, wobei die Kontrolllinien obere Grenzen oder untere Grenzen sind, um zu bestimmen, ob der Zielsensor normal oder anormal ist;
Bestimmen einer Genauigkeit des Zielsensors basierend auf aktuellen Daten des Zielsensors und den Kontrolllinien; und
Steuern eines Betriebszustands des Zielsensors basierend auf der Genauigkeit.

**2.** Einrichtung (100) nach Anspruch 1,
wobei der mindestens eine Prozessor (110) ferner konfiguriert ist, um die historischen Daten des Referenzsensors unter Verwendung einer Abstandskorrelation zwischen den historischen Daten des Zielsensors und historischen Daten einer Vielzahl von Sensoren, die nicht als der Zielsensor ausgewählt sind, zu bestimmen.

**3.** Einrichtung (100) nach Anspruch 1 oder 2,

wobei, um die posterioren Verteilungen der Regressionskoeffizienten und den Fehlerterm der Regressionskurve zu aktualisieren, der mindestens eine Prozessor (110) ferner konfiguriert ist, um die abgeleitete posteriore Verteilung des Polynomregressionsmodells auf eine vorherige Verteilung des Polynomregressionsmodells zu setzen, und Setzen einer Wahrscheinlichkeitsfunktion.

**4.** Einrichtung (100) nach einem der Ansprüche 1 bis 3,
wobei der mindestens eine Prozessor (110) ferner konfiguriert ist, um die posterioren Verteilungen der Regressionskoeffizienten und den Fehlerterm der Regressionskurve basierend auf einem R-hat-Wert und einer effektiven Probengröße zu validieren.

5. Einrichtung (100) nach einem der Ansprüche 1 bis 4,
wobei der mindestens eine Prozessor (110) ferner konfiguriert ist zum:

Setzen des Glaubwürdigkeitsintervalls basierend auf einem höchsten posterioren Dichtewert mit einem voreingestellten Prozentsatz von erwarteten Werten der posterioren Verteilungen der Regressionskoeffizienten und dem Fehlerterm der Regressionskurve, und

Setzen der Kontrolllinien der Daten des Zielsensors unter Verwendung von unteren und oberen Begrenzungswerten der posterioren Verteilungen der Regressionskoeffizienten und des Fehlerterms der Regressionskurve, wobei die unteren und oberen Begrenzungswerte jeweils unteren und oberen Grenzen des Glaubwürdigkeitsintervalls entsprechen.

6. Computerimplementiertes Verfahren zum Bestimmen eines Betriebszustands eines Sensors, umfassend:

Bestimmen von Anfangswerten von Parametern eines Bayes'schen Modells und eines Grads eines Polynomregressionsmodells basierend auf historischen Daten eines Zielsensors und historischen Daten eines Referenzsensors;

Ableiten von posterioren Verteilungen von Regressionskoeffizienten und eines Fehlerterms einer Regressionskurve, die eine Korrelation zwischen den historischen Daten des Zielsensors und den historischen Daten des Referenzsensors darstellt, unter Verwendung des Polynomregressionsmodells und des Bayes'schen Modells;

Setzen eines Glaubwürdigkeitsintervalls basierend auf den posterioren Verteilungen der Regressionskoeffizienten und dem Fehlerterm der Regressionskurve und Setzen von Kontrolllinien von Daten des Zielsensors unter Verwendung des Glaubwürdigkeitsintervalls, wobei die Kontrolllinien obere Grenzen oder untere Grenzen sind, um zu bestimmen, ob der Zielsensor normal oder anormal ist;

Bestimmen einer Genauigkeit des Zielsensors basierend auf aktuellen Daten des Zielsensors und den Kontrolllinien; und

Steuern eines Betriebszustands des Zielsensors basierend auf der Genauigkeit.

7. Verfahren nach Anspruch 6, ferner umfassend:
Bestimmen der historischen Daten des Referenzsensors unter Verwendung einer Abstandskorrelation zwischen den historischen Daten des Zielsensors und historischen Daten einer Vielzahl von Sensoren, die nicht als der Zielsensor ausgewählt sind.

8. Verfahren nach Anspruch 6 oder 7,
wobei das Ableiten der posterioren Verteilungen der Regressionskoeffizienten und des Fehlerterms der Regressionskurve umfasst:

Setzen der abgeleiteten posterioren Verteilung des Polynomregressionsmodells auf eine vorherige Verteilung des Polynomregressionsmodells, und
Setzen einer Wahrscheinlichkeitsfunktion.

9. Verfahren nach einem der Ansprüche 6 bis 8,
wobei das Ableiten der posterioren Verteilungen der Regressionskoeffizienten und des Fehlerterms der Regressionskurve umfasst:
Validieren der posterioren Verteilungen der Regressionskoeffizienten und des Fehlerterms der Regressionskurve basierend auf einem R-hat-Wert und einer effektiven Probengröße.

10. Verfahren nach einem der Ansprüche 6 bis 9,
wobei das Setzen der Kontrolllinien der Daten des Zielsensors umfasst:

Setzen des Glaubwürdigkeitsintervalls basierend auf einem höchsten posterioren Dichtewert mit einem voreingestellten Prozentsatz eines erwarteten Wertes der posterioren Verteilungen der Regressionskoeffizienten und dem Fehlerterm der Regressionskurve, und
Setzen der Kontrolllinien der Daten des Zielsensors unter Verwendung von unteren und oberen Begrenzungswerten der posterioren Verteilungen der Regressionskoeffizienten und des Fehlerterms der Regressionskurve, wobei die unteren und oberen Begrenzungswerte unteren und oberen Grenzen des Glaubwürdigkeitsintervalls entsprechen.

11. Nichtflüchtiges computerlesbares Speichermedium, das Anweisungen zum Ausführen des Verfahrens nach einem der Ansprüche 6 bis 10 speichert.

**Revendications**

1. Dispositif (100) de détermination de l'état de fonctionnement d'un capteur, comprenant :

   au moins un processeur (110), et
   au moins une mémoire (130) reliée audit au moins un processeur (110), ladite mémoire (130) étant configurée pour transmettre audit au moins un processeur (110) des instructions dont l'exécution entraîne ledit au moins un processeur (110) à :

   déterminer les valeurs initiales de paramètres d'un modèle bayésien et le degré de régression polynomiale à partir des données historiques d'un capteur cible et des données historiques d'un capteur de référence ;
   déduire des distributions postérieures de coefficients de régression et un terme d'erreur d'une courbe de régression représentant une corrélation entre les données historiques du capteur cible et les données historiques du capteur de référence au moyen du modèle de régression polynomiale et du modèle bayésien ;
   fixer un intervalle de crédibilité sur la base des distributions postérieures des coefficients de régression et du terme d'erreur de la courbe de régression, et fixer des lignes de commande de données du capteur cible au moyen de l'intervalle de crédibilité, les lignes de commande étant des limites supérieures ou inférieures pour déterminer si le capteur cible est normal ou anormal ;
   déterminer la précision du capteur cible sur la base des données actuelles du capteur cible et des lignes de commande ; et
   commander l'état de fonctionnement du capteur cible sur la base de la précision.

2. Dispositif (100) selon la revendication 1,
   où ledit au moins un processeur (110) est en outre configuré pour déterminer les données historiques du capteur de référence au moyen d'une corrélation de distance entre les données historiques du capteur cible et des données historiques d'une pluralité de capteurs non sélectionnés comme capteur cible.

3. Dispositif (100) selon la revendication 1 ou la revendication 2,

   où, afin de mettre à jour les distributions postérieures des coefficients de régression et le terme d'erreur de la courbe de régression, ledit au moins un processeur (110) est en outre configuré pour fixer la distribution postérieure déduite du modèle de régression polynomiale à une distribution antérieure du modèle de régression polynomiale, et
   à fixer une fonction de vraisemblance.

4. Dispositif (100) selon l'une des revendications 1 à 3,
   où ledit au moins un processeur (110) est en outre configuré pour valider les distributions postérieures des coefficients de régression et le terme d'erreur de la courbe de régression sur la base d'une valeur R-hat et d'une taille d'échantillon effective.

5. Dispositif (100) selon l'une des revendications 1 à 4,
   où ledit au moins un processeur (110) est en outre configuré pour :

   fixer l'intervalle de crédibilité sur la base d'une valeur de densité postérieure maximale ayant un pourcentage prédéfini de valeurs attendues des distributions postérieures des coefficients de régression et du terme d'erreur de la courbe de régression, et
   fixer les lignes de commande des données du capteur cible au moyen de valeurs limites inférieure et supérieure des distributions postérieures des coefficients de régression et du terme d'erreur de la courbe de régression, les valeurs limites inférieure et supérieure correspondant respectivement aux limites inférieure et supérieure de l'intervalle de crédibilité.

6. Procédé mis en œuvre par ordinateur pour déterminer l'état de fonctionnement d'un capteur, comprenant :

la détermination des valeurs initiales de paramètres d'un modèle bayésien et du degré de régression polynomiale à partir des données historiques d'un capteur cible et des données historiques d'un capteur de référence ;

la déduction de distributions postérieures des coefficients de régression et d'un terme d'erreur d'une courbe de régression représentant une corrélation entre les données historiques du capteur cible et les données historiques du capteur de référence au moyen du modèle de régression polynomiale et du modèle bayésien ;

la fixation d'un intervalle de crédibilité sur la base des distributions postérieures des coefficients de régression et du terme d'erreur de la courbe de régression, et fixer des lignes de commande des données du capteur cible au moyen de l'intervalle de crédibilité, les lignes de commande étant des limites supérieures ou inférieures pour déterminer si le capteur cible est normal ou anormal ;

la détermination de la précision du capteur cible sur la base des données actuelles du capteur cible et des lignes de commande ; et

la commande d'un état de fonctionnement du capteur cible sur la base de la précision.

7. Procédé selon la revendication 6, comprenant en outre :

la détermination des données historiques du capteur de référence au moyen d'une corrélation de distance entre les données historiques du capteur cible et des données historiques d'une pluralité de capteurs non sélectionnés comme capteur cible.

8. Procédé selon la revendication 6 ou la revendication 7,

où la déduction des distributions postérieures des coefficients de régression et du terme d'erreur de la courbe de régression comprend :

la fixation de la distribution postérieure déduite du modèle de régression polynomiale à une distribution antérieure du modèle de régression polynomiale, et

la fixation d'une fonction de vraisemblance.

9. Procédé selon l'une des revendications 6 à 8,

où la déduction des distributions postérieures des coefficients de régression et du terme d'erreur de la courbe de régression comprend :

la validation des distributions postérieures des coefficients de régression et du terme d'erreur de la courbe de régression sur la base d'une valeur R-hat et d'une taille d'échantillon effective.

10. Procédé selon l'une des revendications 6 à 9,

où la fixation des lignes de commande des données du capteur cible comprend :

la fixation de l'intervalle de crédibilité sur la base d'une valeur de densité postérieure maximale ayant un pourcentage prédéfini de valeurs attendues des distributions postérieures des coefficients de régression et du terme d'erreur de la courbe de régression, et

la fixation des lignes de commande des données du capteur cible au moyen de valeurs limites inférieure et supérieure des distributions postérieures des coefficients de régression et du terme d'erreur de la courbe de régression, les valeurs limites inférieure et supérieure correspondant aux limites inférieure et supérieure de l'intervalle de crédibilité.

11. Support d'enregistrement non transitoire lisible par ordinateur, comprenant des instructions d'exécution du procédé selon l'une des revendications 6 à 10.

FIG. 1

FIG. 2

```
                        ┌─────────────┐
                        │    start    │
                        └──────┬──────┘
                               │
                               ▼
┌──────────┐   ┌───────────────────────────────────────────────────┐
│  S200    │   │    determining data of the sensor to be analyzed   │
└──────────┘   └───────────────────────┬───────────────────────────┘
                                        │
                                        ▼
┌──────────┐   ┌───────────────────────────────────────────────────┐
│  S210    │   │  determining the initial value of the parameter    │
│          │   │  of the Bayesian model and determining the degree  │
│          │   │  of the polynomial regression model                │
└──────────┘   └───────────────────────┬───────────────────────────┘
                                        │
                                        ▼
┌──────────┐   ┌───────────────────────────────────────────────────┐
│  S220    │   │  inferring a posterior distribution of a           │
│          │   │  regression coefficient and an error term of a     │
│          │   │  regression curve representing a correlation       │
│          │   │  between the historical data of the sensor to be   │
│          │   │  analyzed and the historical data of the sensor    │
│          │   │  to be compared                                    │
└──────────┘   └───────────────────────┬───────────────────────────┘
                                        │
                                        ▼
┌──────────┐   ┌───────────────────────────────────────────────────┐
│  S230    │   │         validating the posterior distribution      │
└──────────┘   └───────────────────────┬───────────────────────────┘
                                        │
                                        ▼
┌──────────┐   ┌───────────────────────────────────────────────────┐
│  S240    │   │   setting a control line for data of the sensor    │
│          │   │   to be analyzed                                   │
└──────────┘   └───────────────────────┬───────────────────────────┘
                                        │
                                        ▼
┌──────────┐   ┌───────────────────────────────────────────────────┐
│  S250    │   │    determining accuracy of the sensor to be analyzed│
└──────────┘   └───────────────────────┬───────────────────────────┘
                                        │
                                        ▼
┌──────────┐   ┌───────────────────────────────────────────────────┐
│  S260    │   │       controlling operational status of the sensor │
└──────────┘   └───────────────────────┬───────────────────────────┘
                                        │
                                        ▼
                                ┌─────────────┐
                                │     end     │
                                └─────────────┘
```

# FIG. 3

```
                        ┌─────────────┐
                        │    start    │
                        └─────────────┘
                               │
                               ▼
S300 ┌──────────────────────────────────────────────────────┐
     │       determining data of the sensor to be compared    │
     └──────────────────────────────────────────────────────┘
                               │
                               ▼
S310 ┌──────────────────────────────────────────────────────┐
     │      determining the initial value of the parameter of the │
     │      Bayesian model and determining the degree of the  │
     │              polynomial regression model               │
     └──────────────────────────────────────────────────────┘
                               │
                               ▼
S320 ┌──────────────────────────────────────────────────────┐
     │              attuning the control limit                │
     └──────────────────────────────────────────────────────┘
                               │
                               ▼
S330 ┌──────────────────────────────────────────────────────┐
     │ inferring the posterior distribution of the regression coefficient │
     │   and the error term of the regression curve representing the │
     │   correlation between the historical data of the sensor to be │
     │ analyzed and the historical data of the sensor to be compared │
     └──────────────────────────────────────────────────────┘
                               │
                               ▼
S340 ┌──────────────────────────────────────────────────────┐
     │           validating the posterior distribution        │
     └──────────────────────────────────────────────────────┘
                               │
                               ▼
S350 ┌──────────────────────────────────────────────────────┐
     │     setting the control line for data of the sensor to be │
     │                        analyzed                        │
     └──────────────────────────────────────────────────────┘
                               │
                               ▼
S360 ┌──────────────────────────────────────────────────────┐
     │       validating the validity of the sensor to be analyzed │
     └──────────────────────────────────────────────────────┘
                               │
                               ▼
S370 ┌──────────────────────────────────────────────────────┐
     │         controlling operational status of the sensor   │
     └──────────────────────────────────────────────────────┘
                               │
                               ▼
                        ┌─────────────┐
                        │     end     │
                        └─────────────┘
```

FIG. 4

## FIG. 5A

FIG. 5B

FIG. 5C

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4015781 A1